# EUROPEAN PATENT APPLICATION

(11) **EP 1 215 599 A1**
(43) Date of publication of application: **19.06.2002**
(21) Application number: 00917452.5
(22) Date of filing: 24.04.2000
(51) Int. Cl.: G06F 17/60, G06F 19/00

(54) **METHOD FOR EVALUATING DISTRIBUTION VALUE OF RIGHT AND DEVICE USED THEREFOR**

(30) Priority: 11.05.1999 JP 13053999; 24.02.2000 JP 2000048012
(71) Applicant: Kanebo Limited, Sumida-ku, Tokyo 131-0031 (JP)
(72) Inventor: MATSUI, Hironori, Nara 636-0824 (JP); NISHIMURA, Fuyuji, Kobe-shi, Hyogo 657-0066 (JP); TOKUOKA, Shuji, Takatsuki-shi, Osaka 569-1133 (JP); OMORI, Akiko, Ibaraki-shi, Osaka 567-0045 (JP); NAKAOKA, Junichi, Tokyo 125-0054 (JP)
(74) Representative: Reinhard - Skuhra - Weise & Partner
(86) International application number: JP0002692
(87) International publication number: WO0068847

(57) **Abstract**

A field to which a right to be appraised belongs is specified, and a group of rights belonging to the field is extracted. The negotiatabilities of the individual rights of the right group are relatively evaluated to rank the right group. According to this method, the negotiatability of a right such as a patent at the current point in time can be properly appraised while considering the influence which may be received from another right.

## Description

### TECHNICAL FIELD

The present invention relates to a method for appraising the negotiatabilities of rights such as patents, and a system using the method.

### BACKGROUND ART

In modern society, a highly computerized society, where technical innovation rapidly progresses, interests in the intellectual properties such as industrial properties are enhanced day by day, and a variety of protecting systems have been prepared for intensifying the protections of those rights. On the other hand, individual enterprises and persons owning such rights are expected to receive financing on the security of the property value, or to gain profits by licensing or transferring the rights, so that they may develop their businesses in a positive manner.

However, the rights of intellectual properties are characterized as having values which fluctuate so severely that they are risky for the security of financing. Therefore, a venture enterprise which is poor in tangible property cannot easily obtain financing, even if its right is to be deposited as security. For similar reasons, on the other hand, it is not easy to properly determine the sum of consideration for licenses or transfers.

Considering patents an example, even a patent which has been registered may be invalidated by an opposition. On the other hand, even if a patent validly exists, a superior patent made later may force a decline in the value of the preceding patented invention as the succeeding invention spreads.

Therefore, it becomes an important issue to properly appraise the market value of a patent, especially for the security of financing. However, this subject cannot be satisfied by the discount cash flow method (i.e., the DCF method) which has been employed in prior art as a method for appraising the value of a right.

In this DCF method, more specifically, the present value of a specific right is appraised by predicting the future profits of products made under the right for each year, and by reducing the predicted profits at a suitable ratio. Since no subsequent new technique is considered within the prediction of future profits, however, there arises a problem that the validity of the right in the actual market cannot be correctly appraised. Because of the difficulty in the prediction, on the other hand, the reduction ratio is enlarged to lower the risk. This raises another problem that even a right having a promising high value is often appraised at a lower price.

The invention has been conceived in view of the background thus far described, and has an object to provide a method for appraising the negotiatability of a right such as a patent at a specific point of time while considering the influences which may be received from another right, and a system using the method.

### DISCLOSURE OF THE INVENTION

In order to achieve the above-specified object, according to a first gist of the invention, there is provided a right negotiatability appraising method comprising: specifying the field to which a right to be appraised belongs; extracting a group of rights belonging to said field; and evaluating the negotiatabilities of the individual rights of said right group relatively, to rank said right group.

According to a second gist of the invention, there is provided a right negotiatability appraising method comprising: specifying the field to which a right to be appraised belongs; extracting a group of rights belonging to said field; dividing said right group into a plurality of right groups by bundling rights having a specific attribute into one group; and ranking at least one such of said divided right groups as is suited for an appraisal purpose, by evaluating the negotiatabilities of the individual rights relatively for each group.

According to a third gist of the invention, there is provided a right negotiatability appraising method comprising: specifying the field to which a right to be appraised belongs; extracting a group of rights belonging to said field; dividing said right group into a plurality of right groups by bundling rights having a specific attribute into one group; and evaluating the negotiatabilities of said divided right groups relatively at the unit of group, thereby to rank said right groups.

In a right negotiatability appraising method of the third gist, according to a fourth gist of the invention, the individual divided right groups are ranked by evaluating the negotiatabilities of the individual rights relatively, and wherein the individual ranked right groups are arranged according to the ranked results of the right groups to rank all the extracted right groups finally.

According to a fifth gist of the invention, the appraisal item of at least one right of the right groups, which were ranked by the right negotiatability appraising method as set forth in the foregoing methods, is specified so that the appraisal item of another ranked right is calculated and evaluated on the basis of the specified appraisal item.

According to a sixth gist of the invention, there is provided a right negotiatability appraising system comprising: extraction means for extracting a right group of a specific field from a database which is stored with bibliographic data, lapse data and other data on rights; and right ranking means for evaluating and ranking the individual rights of said right group on the basis of the data of the right group extracted by said extraction means.

According to a seventh gist of the invention, there is provided a right negotiatability appraising system comprising: extraction means for extracting a right group of a specific field from a database which is stored with bibliographic data, lapse data and other data on rights; right group dividing means for dividing the right group extracted by said extraction means, into a plurality of right groups by bundling the rights having a specific attribute, into one group; and right ranking means for evaluating and ranking the individual rights of said right group for each of said divided right groups on the basis of the data of the individual right groups.

According to an eighth aspect of the invention, there is provided a right negotiatability appraising system comprising: extraction means for extracting a right group of a specific field from a database which is stored with bibliographic data, lapse data and other data on rights; right group dividing means for dividing the right group extracted by said extraction means into a plurality of right groups by bundling these rights having a specific attribute into one group; and group unit ranking means for evaluating the negotiatabilities of the divided right groups relatively at the unit of group and ranking the right groups.

According to a ninth gist of the invention, there is provided a right negotiatability appraising system according to the eighth gist further comprising: right ranking means for evaluating and ranking the individual rights of each of said divided right groups relatively on the basis of the data of the individual right groups; and total ranking means for ranking all of the extracted right groups finally by arranging the individual right groups ranked by said ranking means, in accordance with the ranked results of the right groups which are ranked by said group unit ranking means.

In these systems, according to a tenth gist of the invention, there is provided a right negotiatability appraising system further comprising: negotiatability index input means for inputting the negotiatability index on the right; and calculation means for calculating the negotiatability index of another right which has been ranked on the basis inputted from said negotiatability index input means and relating to at least one right.

Here in the invention, the "right" should be construed to cover a variety of rights having market value, as including not only the following industrial properties but also copyrights: (1) a patent right, as ensured in Patent Law, and a right for acquiring a patent; (2) a utility model right, as ensured in Utility Model Law, and a right for acquiring a registration of a utility model; (3) a design right, as ensured in Design Law, and a right for acquiring a registration of a design; (4) a trademark, as ensured in Trademark Law, and a right for acquiring a registration of a trademark; and (5) a semiconductor circuit arrangement using right.

### BRIEF DESCRIPTION OF DRAWINGS

Fig. 1 is a block diagram of a system according to one embodiment of the invention, and Fig. 2 is a flow chart showing an operation procedure using the system.
Fig. 3 is a block diagram of a system according to another embodiment of the invention.
Fig. 4 is an explanatory table showing the state, in which a right group is extracted, of still another embodiment of the invention, while Fig. 5 is an explanatory table showing the state in which the extracted right group is divided separately according to the objects of inventions. Further, Fig. 6 is an explanatory table showing the state in which all the extracted right groups are ranked.
Fig. 7 is a block diagram of a system according to a further embodiment of the invention.

### BEST MODES FOR CARRYING OUT THE INVENTION

Here will be described embodiments of the invention with reference to the accompanying drawings.

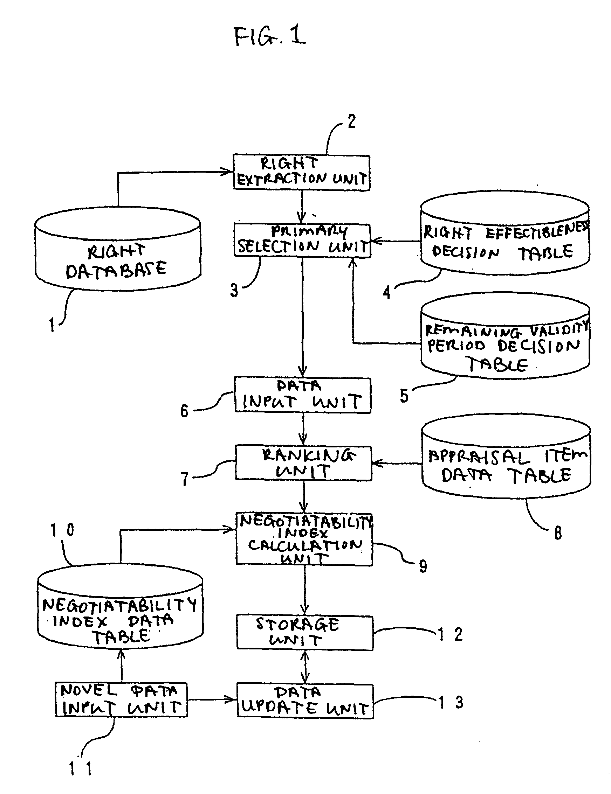

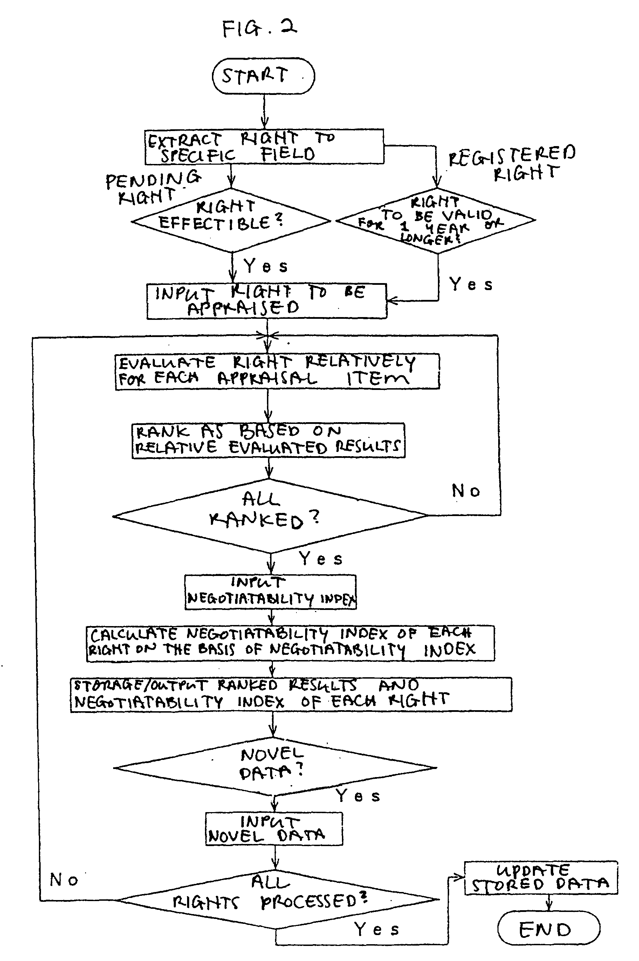

Fig. 1 is a block diagram of a right negotiatability appraising system according to one embodiment of the invention, and Fig. 2 is a flow chart showing an operation procedure of the same. In Fig. 1, numeral 1 designates a right database which is stored with bibliographical data, lapse data or other data on rights and which can exploit an existing information service (e.g., PATOLIS). Numeral 2 designates a right extraction unit capable of extracting a right group of a specific field from the right database 1. This right extraction unit 2 is enabled, by inputting several conditions such as the category of a right (e.g., the category of Patent, Utility Model, Design or Trademark) to be appraised or the class of the right (e.g., the technical field for Patent or Utility Model, the classification for Design, or the commodity/service classification for Trademark), to extract the right group belonging to a limited specific range related from the viewpoint of the market negotiatability. Where the numbers (e.g., Patent Nos. or Laid-Open Nos.) of rights of a group to be compared and appraised are known, the "extracting operation" implies the operation to extract the individual pieces of information from those numbers.

Of the right data of the group as extracted by the right extraction unit 2, those which cannot be clearly evaluated are selected and removed. Of the pending ones of the extracted right groups, more specifically, there is exploited a right effectibleness decision table 4 which is stored with the fundamental right effecting requisites (e.g., the effectiveness of the invention, the industrial usability, the novelty, the inventive step and a non-correspondence to the unpatentable reasons for Patent), so that those failing to satisfy any of the above-specified requisites are eliminated from the right data to be appraised, because of lack of right effectibleness. Of the extracted right group, on the other hand, those having a right such as a patent settled and registered are excluded from the rights to be appraised, by exploiting a remaining-valid period decision table 5 which is set to calculate the remaining-valid period of the right instantly from the remaining-valid period settled by the law, if the remaining-valid period is so short (e.g., 1 year or shorter) that it need not be estimated.

The data of the right group, as not eliminated at the primary selection unit 3 but individually cleared, are all inputted together with the bibliographic data to a data input unit 6, and the right group is relatively evaluated in a ranking unit 7. This relative evaluation is performed by exploiting an appraisal item data table 8 which is stored with a predetermined number of items determining the negotiatability of the right. Here, the appraisal items are exemplified by the following case in which the patent is to be appraised.

### [Patent Appraisal Items]

### (5) Bibliographic Items

- Category of Invention (Product Predominant over Method)
- No. of Claims (Predominant for the More)
- Remaining-valid Period (Predominant for the Longer)
- Share (Predominant for the More)

### (2) Effectibleness of Patent

- Existence of Reasons for Invalidation
- Room for Restriction on Scope of Right by Corrections

### (3) Technical Value

- Originality
- Completeness
- Possibilities (Applicability)

### (4) Economical Value

- Scale of Target Market
- Sales Scale / Profit Sum

### (5) Value of Right

- Exclusiveness
- Facility of Discovery of Infringement

Here, the appraisals of individual items are performed: by evaluating the target right groups stepwise individually for the items; by multiplying each item by a factor according to the degree for the item to determine the negotiatability so that the importance of the item may be reflected on each evaluated value; and by summing the products to obtain a total appraised value.

By comparing the total appraised values obtained, moreover, the ranking operation can be performed in a manner so as to arrange the target right groups sequentially in their order of magnitude.

For the right groups thus relatively ranked, negotiatability indexes are calculated by a negotiatability index calculation unit 9. With the negotiatability index calculation unit 9, more specifically, there is connected a negotiatability index data table 10 for inputting and storing the negotiatability index (e.g., the market price) of the right dealt actually in the market, together with the handling mode (e.g., the transfer contract, the exclusive license contract or the nonexclusive license contract), so that the negotiatability index of such a right of the ranked group as has been actually marketed can be extracted. Numeral 11 designates a novel data input unit for the sequential inputs.

From the negotiatability index, as extracted from the negotiatability index data table 10, and its right rank, therefore, it is possible to calculate a negotiatability index of another rank. Here, a corresponding relation between the rank and the negotiatability index is inputted in advance to the negotiatability index calculation unit 9, so that when a reference negotiatability index and a rank are determined, the negotiatability index of a right of another rank can be instantly calculated.

The ranking of the right group belonging to a specific field and the result of the negotiatability index are so stored in a storage unit 12 that they can be extracted as information at any time. Where any of the stored right groups is actually transacted on some day to determine its negotiatability index, moreover, this index is inputted through a data update unit 13 to the storage unit 12 so that the stored data are updated.

Therefore, the appraisal of the rights in a field need not be renewed from the beginning, but is made on the basis of stored data which is stored and sequentially updated in the storage unit 12.

The procedure for the right appraisals using the right appraising system will be described (with reference to Figs. 1 and 2) on the case where the negotiatability indexes of five patents (A, B, C, D and E) belonging to the field of an ink jet printing technique are extracted in advance.

These five patents have already been extracted in the specific field. At the primary selection unit 3, therefore, the remaining-valid periods of the individual rights are calculated at first by using the remaining-valid period decision table 5, to exclude one or ones having an expiration term of one year or shorter. In this case, all rights have a remaining-valid period of one year or longer, meaning that they are to be appraised.

Next, all data including the bibliographic data and the examining procedure data of the individual rights are inputted to the data input unit 6, so that the rights are relatively appraised on the basis of that data by the ranking unit 7 for the aforementioned individual appraisal items. The enumerated values are enumerated in the following Table 1:

**(Table 1)**

| | | Relative Appraisals | | | | |
|---|---|---|---|---|---|---|
| | | A | B | C | D | E |
| Biblio graphic Items | Category | 2 | 1 | 2 | 1 | 1 |
| | No. of Claims | 4 | 3 | 5 | 2 | 1 |
| | Remaining-valid Period | 3 | 4 | 2 | 1 | 5 |
| | Share | 2 | 2 | 2 | 1 | 1 |
| Validity of Patent | Existence of Invalidation | 5 | 3 | 4 | 2 | 1 |
| | Room for Restrictions by Correction | 3 | 4 | 5 | 2 | 1 |
| Technical Values | Originality | 5 | 3 | 2 | 4 | 1 |
| | Completeness | 3 | 4 | 5 | 1 | 2 |
| | Possibilities (Applicability) | 1 | 2 | 3 | 5 | 4 |
| Economic Values | Scale of Target Market | 2 | 2 | 1 | 1 | 1 |
| | Sales Scale /Profit Sum | 1 | 1 | 1 | 1 | 1 |
| Value of Right | Exclusiveness | 3 | 2 | 5 | 4 | 3 |
| | Facility of Discovery of Infringement. | 5 | 3 | 4 | 1 | 2 |

Next, the individual evaluated values are multiplied by the factor, as preset under the assumption that the individual appraisal items are not equivalent, and the multiplied values are summed to obtain the total appraised value. The factor and the summed total appraised values are enumerated in the following Table 2:

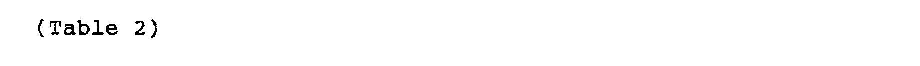

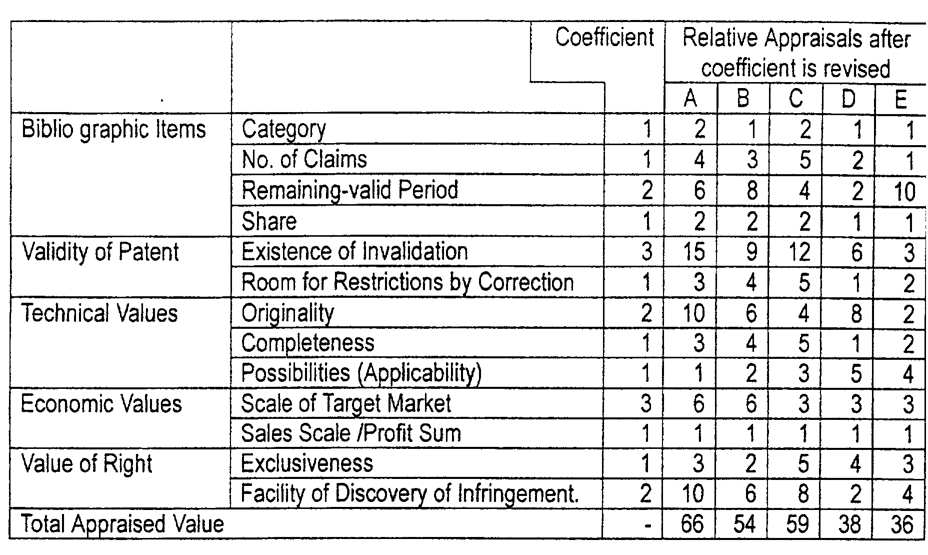

By comparing the magnitudes of the total appraised values, five Patents are ranked to have an order of A, B, C, D and E from the largest value to the smallest.

If the data on the patent rights A to E are extracted from the negotiatability index data table 10, on the other hand, it is found that royalties for the nonexclusive licenses have been actually paid for Patents A and B, as follows:
A: Royalty for Nonexclusive License of ¥5,000,000; and
B: Royalty for Nonexclusive License of ¥3,000,000.

Therefore, these two values (of Nonexclusive Licenses) are inputted as the negotiatability indexes of Patents A and B to the negotiatability index calculation unit 9 in order to calculate the remaining Patents C to E. The following negotiatability indexes can thus be obtained:
C: ¥4,000,000;
D: ¥2,000,000; and
E: ¥1,000,000.

If Patents A to E are to be handled altogether, therefore, the total negotiatability index is calculated to A + B + C + D + E = ¥15,000,000.

Here, the calculation in the negotiatability index calculation unit 9 is based on the premise that the negotiatability index intervals for each rank in the ranking operation are equivalent (on a linear relation). As the case may be, however, the relative equation to be used can be a predetermined quadratic or cubic function.

On the other hand, where the data on the negotiatability indexes are so different for the kinds of transaction modes that the price for the transfer of Patent A is ¥50,000,000 whereas the price for the nonexclusive license of Patent B is ¥3,000,000, or such that the conditions are different even for the nonexclusive licenses with or without the conditions restricting the areas or terms, the negotiatability indexes cannot be handled one-dimensionally, unlike in the above handling. In these cases, therefore, the negotiatability index under the common conditions are desirably determined according to a predetermined transformation equation so as to make those conditional differences one-dimensional.

The ranked results and the results of the negotiatability indexes thus obtained can be stored in the storage unit 12 and outputted for the concrete transactions of Patents A to E. Where data (such as those set with new license royalties) to be added for the negotiatability indexes of the right group appraised in the past are already stored at the storing/outputting operations, they are inputted to update the stored data, and a series of operations are ended.

For a specific right, according to the appraisal method, the negotiatability index at the time is calculated on the basis of the reference negotiatability index while considering the influence coming from another right, so that a more practical and objective negotiatability index can be obtained. Therefore, the risk in the negotiations of rights can be reduced to promote the right negotiations better than with the prior art.

According to the appraisal system thus far described, on the other hand, the right appraisal can be performed simply to improve working efficiency by a simple operation procedure. Especially, the data of the negotiatability index data table is sequentially updated so that the latest negotiatability index is stored to perform a proper appraisal at the time of appraisal. In the storage unit 12, too, the sequential data are updated on the basis of the actual data, so that the appraisals of the right group in the common field need not be renewed from the beginning, thereby imparting an advantage that no troublesome work is involved.

Here in the example, the extracted right group is subjected to the primary selection in the primary selection unit 3 on the basis of the predetermined requisites. However, this selection need not always be made, but instead, all of the right groups extracted may be relatively estimated and ranked. In this modification, in order to exclude valueless rights, an appraisal item such as "right effectibleness" or "right validity" can be settled with a 0 (zero) value so that the right having the 0 value can be set to "out-of rank".

In the example thus far described, on the other hand, the individual rights are stepwise evaluated for a plurality of appraisal items in the ranking unit 7; these appraisals are then multiplied by the predetermined factor and summed to achieve the total appraised values, so that the rights are ranked according to the magnitudes of their total appraised values. The "predetermined coefficients" are not settled at constants, but are set to different values according to the ranking purposes (e.g., for licenses, security evaluations, self-property evaluations or internal evaluations). Moreover, the ranking method need not always be limited to the aforementioned one. For example, it is possible to adopt a method in which the work to determine the superiority of two rights of a right group to be evaluated by extracting the two rights and comparing their negotiatabilities are repeated, by changing the combinations for all of the rights until all the right groups are arranged in their respective order of predominance.

This method is more advantageous over the foregoing one, in that the predominance can be easily decided because of the comparison of the two. More complicated work is required than in the foregoing example for summing and ranking all the rights. It is, therefore, preferable to select and employ either of the methods suitably according to the subjects to be appraised.

In the aforementioned ranking case by comparing the two, also, the appraisal items are preferably enumerated like before as references for the contrast, so that the predominances of the two may be contrasted for each respective item.

In the foregoing example, moreover, when the negotiatability index of the ranked right group is to be obtained, the license royalty based on the actual market transaction is extracted from the negotiatability index data table 10, and is used as a basis for calculating the negotiatability index for another right. When no practical data exists for any of the ranked right group, however, the calculation is groundless. In this modification, therefore, with reference to the ranking and the negotiatability index of a right belonging to another field and having similar conditions such as it thereby adjoins the field of the right group to be evaluated, the negotiatability index, which is virtual but sufficient for the grounding, can be determined, for example, by correcting the referred negotiatability index and using it as the ground.

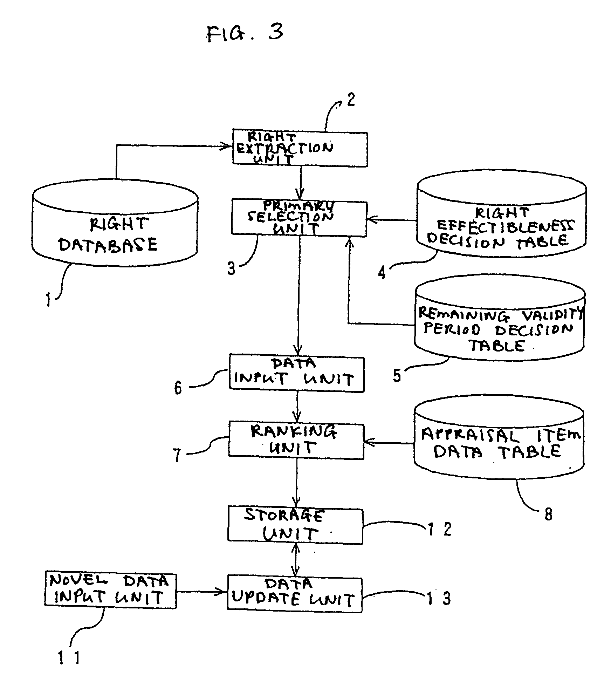

In the foregoing example, on the other hand, the five Patents A to E extracted in advance are ranked at first under the negotiatability indexes, and past actual market data are extracted as negotiatability indexes from the negotiatability index data table 10, so that the negotiatability indexes of the individual rights are determined on the basis of that actual market data. However, it is not absolutely necessary to determine the negotiatability indexes. This is because, if the right group belonging to a specific field can be ranked according to the magnitude of its negotiatability, the negotiatability of the right can be appraised to some extent by using the rank as a measure. Where the negotiatability index need not be thus determined, it is possible to use a right negotiatability appraising system having the construction as shown in Fig. 3, for example.

Here, this system is preferably given not only the ranking function, but also a function to input the ranked information of the negotiatability, as based on the actual transactions in the market, sequentially from the novel data input unit 11 through the data update unit 13 to the storage unit 12, so that the ranked information may be used for subsequent ranking work.

In the foregoing example, moreover, the five Patents A to E extracted in advance are instantly ranked. Where the number of rights belonging to a specific field is so large as several hundreds, for example, it is a very complicated work to rank the rights all at once. On the other hand, the necessary information may become mixed with unnecessary information, making it hard to narrow down information for a specific target. In this case, therefore, rights of one group belonging to the specific field are preferably divided into a plurality of right groups by bundling rights having a specific attribute into one group, after which they are ranked. The aforementioned "division of the rights of a specific attribute" is exemplified by work to divide the rights separately according to the different subjects of the invention, the different business fields, the pending state and the registered state, the different costs regarding the facilities for practicing the invention of the patent, and the different market shares of exclusive rights for practicing the invention. What attribute the division is to be made on is suitably selected in view of the purpose for appraising the right.

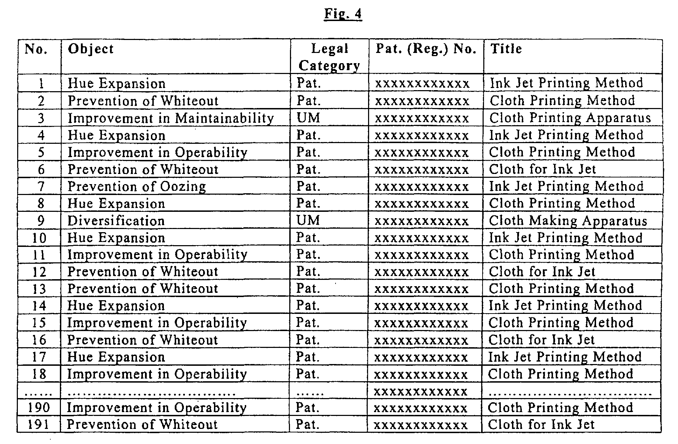

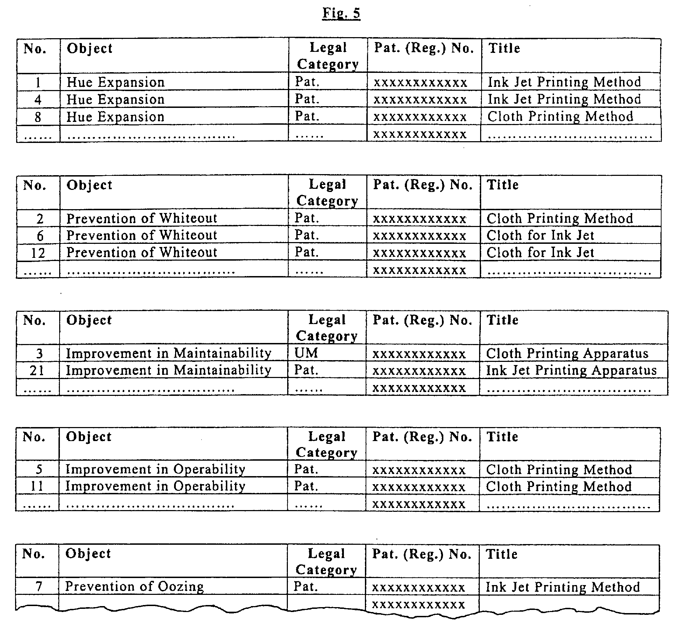

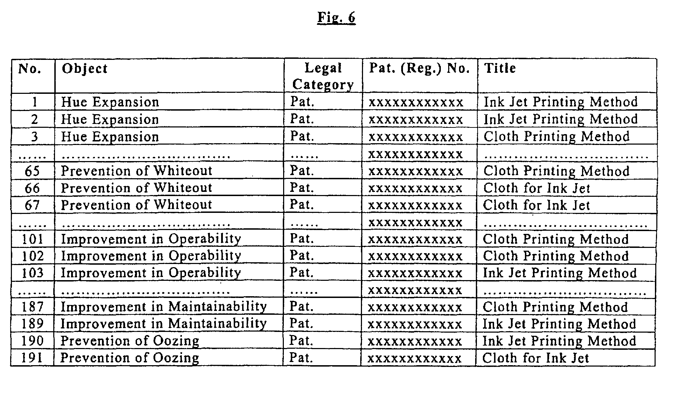

If rights are to be extracted by categorizing them under, for example, "patents on ink jet printing techniques" , a number of right groups for ink jet printing techniques are extracted as, for example, shown in Fig. 4. If these are divided according to the different subjects of the invention such as the hue expansion of the print, improvement in workability, the prevention of whiteout and so on, it is then possible to obtain a number of right groups having a small number of rights belonging thereto. This state is shown in Fig. 5. For the individual right groups divided, therefore, according to the foregoing example, the negotiatabilities of the individual rights of each group are relatively evaluated so as to rank the individual right groups. On the other hand, the negotiatabilities of the divided right groups are relatively evaluated at the unit of group so as to rank the right groups relative to one another. In this case, the attributes (e.g., the hue expansion of the prints, improvement in operability, and the prevention of whiteout) for the grouping references are ranked in view of the purpose of the right appraisals. The ranking method is performed in conformance with the aforementioned method of ranking the individual rights. According to the ranks obtained, moreover, the individual divided right groups are arranged in columns at the unit of group, and the individual rights in each divided right group are arranged in columns. Thus, all the extracted rights can be ranked. This state is shown in Fig. 6.

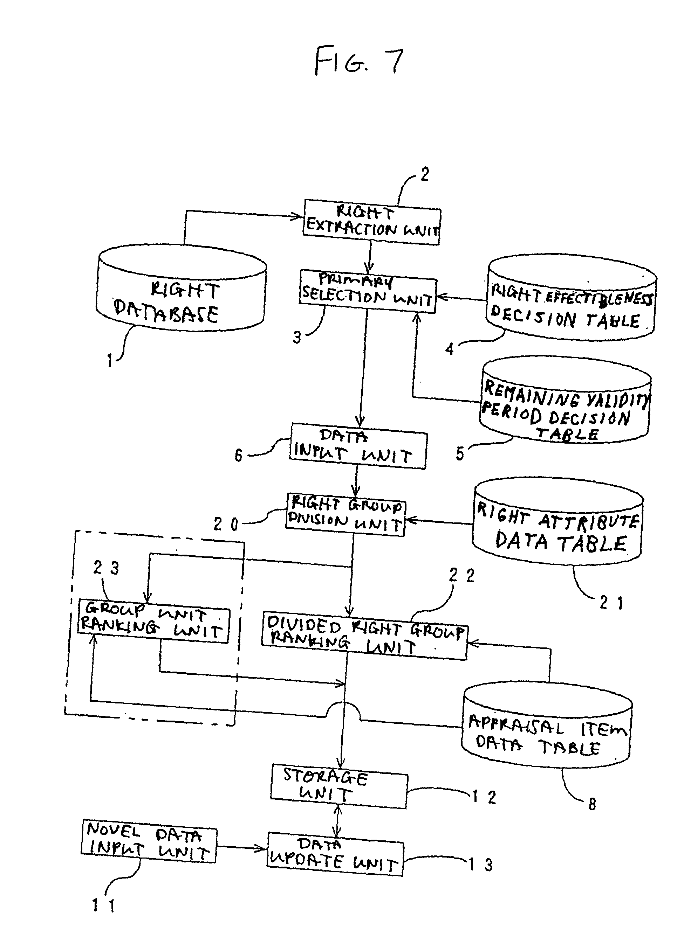

Where the appraisals are to be executed by the aforementioned method, the system is preferably exemplified to have a construction as shown in Fig. 7. In this system, for example, one hundred extracted right groups are divided into a plurality of right groups of small scales by a right group division unit 20 on the basis of a suitable attribute extracted from a right attribute data table 21, and are ranked in a divided right group ranking unit 22. Simultaneously with this, on the other hand, the kind (e.g., the characteristics of each divided right group) of the attribute used for the divisions is evaluated in a group unit ranking unit 23 so that the ranking operations at the unit of group are performed simultaneously and in parallel. Here, for the ranking operation at the unit of group and the ranking operation for the individual rights of each divided right group, there are individually exploited the appraisal items which are stored in the appraisal item data table 8. The remaining constructions are similar to those of the system of Fig. 3.

Where the number of extracted right groups is so small that no division is required, the routine advances, as is, to the divided right group ranking unit 22 for the performance of the ranking operation.

When all the rights are to be ranked, on the other hand, the group units are predominantly arranged in columns, and the individual rights of each divided right group are then arranged in columns. If, in this case, rights a1, a2, a3, a4 and a5 belonging to a group [A] evaluated to be more significant, and rights b1, b2, b3, b4 and b5 belonging to a group [B] evaluated at less significant positions, are arranged in the recited orders in columns, the appraised values may be reversed between the less significant rights (e.g., a4 and a5) belonging to the group [A] and the more significant rights (e.g., b1 and b2) belonging to the group [B]. Although the group [A] is predominant over the group [B], therefore, all the rights a1, a2, a3, a4 and a5 belonging to the group [A] are not uniformly ranked over all the rights b1, b2, b3, b4 and b5 belonging to the group [B]. Of the rights belonging to the group [A], a predetermined number of rights ranked less significant and a predetermined number of rights, as ranked more significant, of the rights belonging to the group [B] are extracted and evaluated again, so that a more accurate ranking operation can be performed.

Where not all rights, but only the rights of a group having a specific attribute are to be ranked, it is sufficient to rank the right group (which may be one, or two or more) having the necessary attribute. In this modification, the ranking operation at the unit of group is not needed so that the construction, as defined by chained lines in Fig. 7, can be eliminated.

Alternatively, not a ranking of rights, but a ranking at the unit of group may be performed. In this modification, the divided right group ranking unit 22 can be eliminated from the construction of Fig. 7.

Where a specific negotiatability index has to be determined for the right groups thus ranked, such can naturally be determined according to the aforementioned procedure, by using the negotiatability index calculation unit 9 and the negotiatability index data table 10, as shown in Fig. 1, in combination.

By exploiting the aforementioned series appraisal method, moreover, for one known specific right, it is possible to search another right having a negotiatability equivalent to that of the specific one. In this case, more specifically, a right group of a field, to which the known right belongs, is extracted and is ranked according to a suitable one of the foregoing methods. By selecting the right which is ranked at a position equivalent to or approximate that of the known right, it is possible to search another right equivalent to the known one. Therefore, it is possible to specify the rights of competitors. On the other hand, a known right is ranked by a similar method, and either a right group belonging to a field different from that to which the right belongs, or a right group belonging to the common field but having a different attribute, is extracted and ranked, so that another right having a value equivalent to or approximate to that of the known right can be searched. As a result, a right not conflicting with the known one but having an equivalent negotiatability can be specified, so that the invention can be used for equal technical cooperations or for negotiations of technical exchanges.

### INDUSTRIAL APPLICABILITY

According to the right appraising method of the invention, as has been described hereinbefore, a specific right or a specific right group can be appraised by ranking it instantly on the basis of the negotiatability at the current point in time in accordance with a predetermined procedure, so that the appraised value can be quickly and properly grasped. Therefore, the risk involved in right marketing can be reduced, so as to achieve marketing promotion effects for rights not enabled hitherto. By accordingly exploiting industrial resources such as inventions, devices, designs or trademarks vigorously, moreover, industrial production can be enlarged, and the business transactions can be performed more smoothly to enable excellent technical effects.

On the other hand, not only the ranking but also the negotiatability index at the current point in time can be calculated on the basis of the reference negotiatability index, so that an objective negotiatability index better conformable to actual conditions can then be obtained.

According to the appraisal system, on the other hand, rights can be efficiently appraised by a simple operating procedure according to the invention.

## Claims

1. A right negotiatability appraising method comprising:
specifying the field to which a right to be appraised belongs; extracting a group of rights belonging to said field; and
evaluating the relative negotiatabilities of the individual rights of said right group, to rank said right group.

2. A right negotiatability appraising method comprising:
specifying the field to which a right to be appraised belongs; extracting a group of rights belonging to said field; dividing said right group into a plurality of right groups by bundling rights having a specific attribute into one group; and ranking at least one such of said divided right groups as is suited for an appraisal purpose, by evaluating the negotiatabilities of the individual rights relatively for each group.

3. A right negotiatability appraising method as set forth in Claim 1 or 2, wherein said ranking of said right group includes: evaluating the individual rights stepwise for a plurality of appraisal items; multiplying the obtained individual evaluated values for each appraisal item by a factor according to the degree at which said appraisal item determines the negotiatability, and summing the products to obtain a total appraised value; and arranging said right groups in the order of the magnitudes of the total appraised values.

4. A right negotiatability appraising method as set forth in Claim 1 or 2, wherein said ranking of said right group includes: repeating the work to determine two rights of the right group by extracting said two rights and comparing their negotiatabilities to determine their predominance, for all the rights, by changing the combinations; and arranging all the right groups finally in the order of predominance.

5. A right negotiatability appraising method comprising:
specifying the field to which a right to be appraised belongs; extracting a group of rights belonging to said field; dividing said right group into a plurality of right groups by bundling rights having a specific attribute into one group; and
evaluating the negotiatabilities of said divided right groups relatively at the unit of group, thereby to rank said right groups.

6. A right negotiatability appraising method as set forth in Claim 5, wherein said ranking of said right group includes:
evaluating the individual divided right groups stepwise for a plurality appraisal items; multiplying the obtained individual evaluated values for each appraisal item by a factor according to the degree at which said appraisal item determines the negotiatability, and summing the products to obtain a total appraised value; and arranging said right groups at the unit of group in the order of the magnitudes of the total appraised values.

7. A right negotiatability appraising method as set forth in Claim 5, wherein said ranking of said right group includes:
repeating the work to determine two of the divided right groups by extracting said two right groups and comparing their negotiatabilities to determine their predominance, for all the right groups, by changing the combinations; and arranging all the right groups finally at the unit of group in the order of predominance.

8. A right negotiatability appraising method as set forth in any of Claims 5 to 7, wherein the individual divided right groups are ranked by evaluating the negotiatabilities of the individual rights relatively, and wherein the individual ranked right groups are arranged according to the ranked results of the right groups to rank all of the extracted right groups finally.

9. A right negotiatability appraising method, wherein the appraisal item of at least one right of the right groups, which were ranked by the right negotiatability appraising method as set forth in any of Claims 1 to 4 and Claim 8, is specified so that the appraisal item of another ranked right is calculated and evaluated on the basis of the specified appraisal item.

10. A right negotiatability appraising system comprising:
extraction means for extracting a right group of a specific field from a database which is stored with bibliographic data, lapse data and other data on rights; and right ranking means for evaluating and ranking the relative negotiabilites of the individual rights of said right group on the basis of the data of the right group extracted by said extraction means.

11. A right negotiatability appraising system comprising:
extraction means for extracting a right group of a specific field from a database which is stored with bibliographic data, lapse data and other data on rights; right group dividing means for dividing the right group extracted by said extraction means into a plurality of right groups by bundling the rights having a specific attribute into one group; and right ranking means for evaluating and ranking the relative negotiabilites of the individual rights of said right group for each of said divided right groups on the basis of the data of the individual right groups.

12. A right negotiatability appraising system as set forth in Claim 10 or 11, wherein said right ranking means is adapted:
to evaluate a target right group stepwise for a plurality of appraisal items; to multiply the obtained individual evaluated values for each appraisal item by a factor according to the degree at which said appraisal item determines the negotiatability, and to sum the products to obtain a total appraised value; and to arrange said right groups in the order of the magnitudes of the total appraised values.

13. A right negotiatability appraising system as set forth in Claim 10 or 11, wherein said right ranking means is adapted:
to repeat the work to determine the predominance of two rights of a target right group by extracting said two rights and
comparing their negotiatabilities, for all the rights, by changing the combinations; and to arrange all the right groups finally in the order of predominance.

14. A right negotiatability appraising system comprising:
extraction means for extracting a right group of a specific field from a database which is stored with bibliographic data, lapse data and other data on rights; right group dividing means for dividing the right group extracted by said extraction means into a plurality of right groups by bundling the rights having a specific attribute into one group; and group unit ranking means for evaluating the negotiatabilities of the divided right groups relatively at the unit of group and ranking the right groups.

15. A right negotiatability appraising system as set forth in Claim 14, wherein said group unit ranking means is adapted:
to evaluate the individual divided right groups stepwise for a plurality of appraisal items; to multiply the obtained individual evaluated values for each appraisal item by a factor according to the degree at which said appraisal item determines the negotiatability, and to sum the products to obtain a total appraised value; and to arrange said right groups at the unit group in the order of the magnitudes of the total appraised values.

16. A right negotiatability appraising system as set forth in Claim 14, wherein said group unit ranking means is adapted:
to repeat the work to determine the predominance of two of the divided right groups by extracting said two right groups and
comparing their negotiatabilities, for all the rights, by changing the combinations; and to arrange all the right groups finally at unit of group in the order of predominance.

17. A right negotiatability appraising system as set forth in any of Claims 14 to 16, further comprising: right ranking means for evaluating and ranking the individual rights of each of said divided right groups relatively on the basis of the data of the individual right groups; and total ranking means for ranking all the extracted right groups finally by arranging the individual right groups ranked by said ranking means, in accordance with the ranked results of the right groups which are ranked by said group unit ranking means.

18. A right negotiatability appraising system as set forth in any of Claims 10 to 13 and Claim 17, further comprising:
negotiatability index input means for inputting the negotiatability index on the right; and calculation means for calculating the negotiatability index of another right which has been ranked on the basis inputted from said negotiatability index input means and relating this to at least one right.
